(19) Europäisches Patentamt / European Patent Office / Office européen des brevets

(11) **EP 4 350 667 A1**

(12) **DEMANDE DE BREVET EUROPEEN**

(43) Date de publication:
**10.04.2024   Bulletin 2024/15**

(21) Numéro de dépôt: **23201348.2**

(22) Date de dépôt: **03.10.2023**

(51) Classification Internationale des Brevets (IPC):
**G08G 5/00** *(2006.01)*   **G01C 21/20** *(2006.01)*
**G05D 1/00** *(2024.01)*   **G01C 23/00** *(2006.01)*
**G06Q 10/047** *(2023.01)*   **G05D 1/644** *(2024.01)*
**G05D 105/20** *(2024.01)*   **G05D 107/13** *(2024.01)*
**G05D 109/22** *(2024.01)*   **G05D 101/15** *(2024.01)*

(52) Classification Coopérative des Brevets (CPC):
**G08G 5/003; G01C 21/20; G01C 23/00;**
**G05D 1/644; G06Q 10/047;** G05D 2101/15;
G05D 2105/20; G05D 2107/13; G05D 2109/22

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**KH MA MD TN**

(30) Priorité:  **05.10.2022   FR 2210197**

(71) Demandeurs:
- **Airbus SAS**
  **31700 Blagnac (FR)**
- **Airbus Operations (S.A.S.)**
  **31060 Toulouse Cedex 9 (FR)**

(72) Inventeurs:
- **ROUQUETTE, Patrice**
  **31060 TOULOUSE (FR)**
- **PAYA-ARNAUD, Thierry**
  **31700 BLAGNAC Cedex (FR)**
- **BERGANTZ, Brice**
  **31060 TOULOUSE (FR)**
- **MASSON, Bertrand**
  **31700 BLAGNAC Cedex (FR)**
- **DELBOVE, Julien**
  **31700 BLAGNAC Cedex (FR)**

(74) Mandataire: **Cabinet Le Guen Maillet**
**3, impasse de la Vigie**
**CS 71840**
**35418 Saint-Malo Cedex (FR)**

(54) **PROCÉDÉ DE GESTION DE PARAMETRES DE VOL D'AERONEFS**

(57)    Un système de gestion de paramètres de vol d'aéronefs est paramétré avec des objectifs globaux de coûts de vols. Pour un premier vol, des paramètres de fonction de coût du premier vol sont déterminés (103) vis-à-vis respectivement de différents facteurs de coûts. Une optimisation de paramètres de vol est effectuée (104) de sorte à minimiser la fonction de coût. Une avionique d'un aéronef effectuant le premier vol est programmée avec lesdits paramètres de vol. Sur détection d'un événement en vol nécessitant une révision des paramètres de vol, les paramètres de fonction de coût sont recalculés, ainsi que les paramètres de vol, et l'avionique est reprogrammée en conséquence. Le procédé est réitéré pour au moins un deuxième vol en tenant compte de la contribution effective du premier vol sur les objectifs globaux, et ainsi de suite. Ainsi, une compagnie aérienne peut réaliser une optimisation multi-objectif globale sur ses vols.

Fig. 1

EP 4 350 667 A1

**Description**

DOMAINE TECHNIQUE

La présente invention concerne le domaine de la gestion de paramètres de vol d'aéronefs.

ETAT DE LA TECHNIQUE ANTERIEURE

Chaque compagnie aérienne cherche à minimiser le coût d'exploitation de ses lignes aériennes et de sa flotte d'aéronefs. Le coût d'exploitation d'un vol d'aéronef est actuellement maitrisé grâce à un indice de coût, utilisé dans sa terminologie anglo-saxonne : *Cost Index.*

Le *Cost Index* permet d'ajuster et d'optimiser les coûts d'exploitation d'un vol d'aéronef en prenant en compte le temps de vol, dont les dépenses de salaires et de maintenance sont proportionnelles, ainsi que le carburant consommé, proportionnel à la poussée et à la vitesse de vol.

Le *Cost Index* est une donnée paramétrable utilisée dans les systèmes de gestion de vol FMS (« Flight Management System » en anglais) embarqués dans les aéronefs. Plus le *Cost Index* tend vers zéro, plus les systèmes de gestion de vol FMS génèrent des profils de vol minimisant la consommation de carburant ; et plus le *Cost Index* s'éloigne de zéro, plus les systèmes de gestion de vol FMS génèrent des profils de vol minimisant le temps de vol.

Bien que le *Cost Index* permette aux compagnies aériennes de définir un objectif d'optimisation à partir du coût du carburant consommé et du coût du temps de vol, le *Cost Index* ne reflète pas la réalité des objectifs modernes des compagnies aériennes, qui sont de minimiser des coûts de bien d'autres natures (par exemple, impact environnemental, bruit...). Le *Cost Index* est par exemple inadapté pour intégrer des coûts de retards, d'incertitudes météorologiques ou d'empreinte environnementale.

De plus, le *Cost Index* est aujourd'hui utilisé uniquement à l'échelle de chaque mission (traj et de l'aéronef d'un aéroport de départ jusqu'à un aéroport de destination) et ne permet pas de réaliser une optimisation globale au niveau réseau (ensemble d'aéroports sur lesquels opèrent les aéronefs d'une compagnie aérienne), au niveau des plannings (horaires de vols), ou au niveau de l'allocation de la flotte (choix des aéronefs à affecter sur telle ou telle ligne aérienne), pour une compagnie aérienne.

Il est alors souhaitable de pallier ces inconvénients de l'état de la technique. Il est notamment souhaitable de fournir une solution qui permette une optimisation multi-objectif plus globale pour les compagnies aériennes.

EXPOSE DE L'INVENTION

A cet effet, il est proposé un procédé implémenté par une circuiterie électronique d'un système de gestion de paramètres de vol d'aéronefs, le système de gestion de paramètres de vol d'aéronefs étant paramétré avec des objectifs globaux de coûts de vols, le procédé comportant les étapes suivantes :

- définir en fonction des objectifs globaux de coûts de vols, pour un premier vol, des paramètres de fonction F de coût dudit premier vol vis-à-vis de N différents facteurs de coûts $F_i$;
- effectuer une optimisation de paramètres de vol de sorte à minimiser la fonction F de coût ;
- programmer une avionique d'un aéronef effectuant ledit premier vol avec lesdits paramètres de vol ;
- sur détection d'un événement en vol nécessitant une révision des paramètres de vol, recalculer les paramètres de fonction F de coût du vol vis-à-vis des N différents facteurs de coûts $F_i$, recalculer les paramètres de vol, et reprogrammer l'avionique en conséquence ;
- déterminer une contribution effective du premier vol sur les objectifs globaux ; et
- réitérer le procédé pour au moins un deuxième vol en tenant compte de la contribution effective déterminée.

Ainsi, une compagnie aérienne peut réaliser une optimisation multi-objectif globale sur ses vols.

Dans un mode de réalisation particulier, les paramètres de fonction F de coût sont des coefficients $C_i$, $i=1,..,N$ associés respectivement aux différents facteurs de coûts $F_i$ selon la formule :

$$F = \sum_{i=1}^{N} (C_i * F_i)$$

Dans un mode de réalisation particulier, le procédé comprend en outre l'étape suivante, pour déterminer la contribution effective du premier vol sur les objectifs globaux : récupérer les paramètres de vol qui ont été réellement appliqués par l'avionique pendant ledit premier vol.

Dans un mode de réalisation particulier, les facteurs de coûts $F_i$ incluent au moins : coûts financiers, coûts environnementaux, coûts d'incertitudes météorologiques, et coûts de risque de retards de planning de vols.

Dans un mode de réalisation particulier, les paramètres de vol incluent au moins : trajectoire verticale, trajectoire latérale, vitesse, et poussée.

Dans un mode de réalisation particulier, le système de gestion de paramètres de vol d'aéronefs est exclusivement implémenté dans une plateforme informatique d'un centre de contrôle d'une compagnie aérienne.

Dans un mode de réalisation particulier, le système de gestion de paramètres de vol d'aéronefs est implémenté conjointement entre une plateforme informatique d'un centre de contrôle d'une compagnie aérienne et l'avionique des aéronefs.

Dans un mode de réalisation particulier, des bagages électroniques de vol servent d'intermédiaires entre la plateforme informatique du centre de contrôle de la compagnie aérienne et l'avionique des aéronefs, éventuellement en complément de communications sans-fil.

Dans un mode de réalisation particulier, chaque vol étant composé d'une succession de segments de vol, appliquer différents paramètres de vol à chaque segment de vol est réalisé de manière automatique par l'avionique, ou par configuration par un pilote.

Il est aussi proposé un produit programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. Il est aussi proposé un support non-transitoire de stockage d'informations sur lequel est stocké un tel programme d'ordinateur.

Il est aussi proposé un système de gestion de paramètres de vol d'aéronefs, le système de gestion de paramètres de vol d'aéronefs étant paramétré avec des objectifs globaux de coûts de vols et comportant de la circuiterie électronique configurée pour implémenter les étapes suivantes :

- définir en fonction des objectifs globaux de coûts de vols, pour un premier vol, des paramètres de fonction F de coût dudit premier vol vis-à-vis de N différents facteurs de coûts Fi;
- effectuer une optimisation de paramètres de vol de sorte à minimiser la fonction F de coût ;
- programmer une avionique d'un aéronef effectuant ledit premier vol avec lesdits paramètres de vol ;
- sur détection d'un événement en vol nécessitant une révision des paramètres de vol, recalculer les paramètres de fonction F de coût du vol vis-à-vis des N différents facteurs de coûts $F_i$, recalculer les paramètres de vol, et reprogrammer l'avionique en conséquence ;
- déterminer une contribution effective du premier vol sur les objectifs globaux ; et
- réitérer le procédé pour au moins un deuxième vol en tenant compte de la contribution effective déterminée.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un organigramme d'un procédé de gestion de paramètres de vol d'aéronefs ;
[Fig. 2A] illustre un premier schéma d'échanges ;
[Fig. 2B] illustre un deuxième schéma d'échanges ;
[Fig. 3] illustre schématiquement un exemple de plateforme matérielle permettant l'implémentation du procédé de gestion de paramètres de vol d'aéronefs ; et
[Fig. 4] illustre schématiquement une succession de segments de vol pendant lesquels différents paramètres de vol sont appliqués.

EXPOSE DETAILLE DE MODES DE REALISATION

De sorte à ne pas confondre l'indice de coût innovant proposé ici avec le *Cost Index* utilisé jusqu'alors dans l'aéronautique, l'indice de coût innovant proposé ici est dénommé « *Smart Index* ».

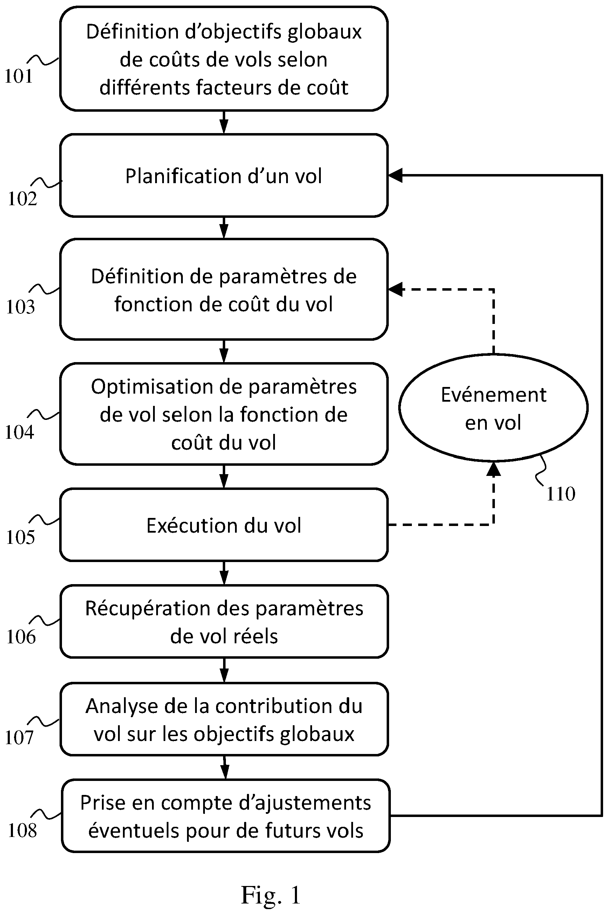

La **Fig. 1** illustre ainsi schématiquement un organigramme d'un procédé de gestion de paramètres de vol d'aéronefs.

Comme détaillé ci-après, le procédé de gestion de paramètres de vol d'aéronefs repose sur la définition de paramètres d'une fonction de coût qui prend en compte différents facteurs de coûts liés à l'exploitation des aéronefs. Dans un mode de réalisation particulier, ces paramètres de fonction de coût sont des coefficients de pondération desdits différents facteurs de coûts liés à l'exploitation des aéronefs.

Dans une étape 101, la compagnie aérienne définit des objectifs globaux de coûts de vols selon différents facteurs de coûts liés à l'exploitation des aéronefs. Ces facteurs de coûts sont par exemple représentatifs de coûts financiers (coûts commerciaux, taxes, frais de maintenance), de coûts environnementaux (émission de $CO_2$, autres sources de forçage radiatif, bruit, qualité de l'air, quantité de carburant non brûlé, quantité de particules émises), de coûts d'incertitudes météorologiques, de coûts de risque de retards de planning de vols, etc. Un système de gestion de paramètres de vol d'aéronefs est alors paramétré avec ces objectifs globaux de coûts de vols. Plus particulièrement, une plateforme informatique d'un centre de contrôle de la compagnie aérienne est paramétrée avec ces objectifs globaux de coûts de vols.

Dans une étape 102, le système de gestion de paramètres de vol d'aéronefs obtient une planification d'un vol d'aéronef depuis un aéroport de départ jusqu'à un aéroport de destination, avec un horaire de départ escompté et un horaire d'arrivée escompté.

Dans une étape 103, le système de gestion de paramètres de vol d'aéronefs définit des paramètres de fonction *F* de coût du vol vis-à-vis respectivement des *N* différents facteurs de coûts $F_i$. Par exemple, la fonction *F* de coût est une combinaison des *N* facteurs de coût, qui est variable en fonction des paramètres de la fonction *F* de coût. La fonction *F* de coût peut être une fonction linéaire ou non-linéaire, voire un algorithme manipulant les facteurs de coût d'après les paramètres de fonction *F* de coût définis.

L'ensemble de ces paramètres de fonction *F* de coût du vol, ou une valeur qui en est dérivée, forme le *Smart Index*.

Le système de gestion de paramètres de vol d'aéronefs définit ainsi des paramètres de fonction *F* de coût en fonction des objectifs globaux de coûts de vols. Le système de gestion de paramètres de vol d'aéronefs peut prendre en compte un état de l'aéronef considéré pour le vol et/ou des performances escomptées de l'aéronef considéré pour le vol (ancienneté de l'aéronef, temps écoulé depuis la dernière maintenance, etc.) pour définir ces paramètres de fonction *F* de coût.

Dans un mode de réalisation particulier, le système de gestion de paramètres de vol d'aéronefs définit des coefficients $C_i$ ($i=1,..,N$) de fonction *F* de coût du vol (qui sont donc les paramètres de la fonction *F* de coût) vis-à-vis respectivement des *N* différents facteurs de coûts $F_i$ selon la formule :

$$F = \sum_{i=1}^{N} (C_i * F_i)$$

Dans ce cas, l'ensemble de ces coefficients $C_i$ ($i=1,..,N$), ou une valeur qui en est dérivée, forme le *Smart Index*.

De plus, dans ce cas, le système de gestion de paramètres de vol d'aéronefs définit ainsi des coefficients $C_i$ en fonction des objectifs globaux de coûts de vols. Et le système de gestion de paramètres de vol d'aéronefs peut prendre en compte un état de l'aéronef considéré pour le vol et/ou des performances escomptées de l'aéronef considéré pour le vol (ancienneté de l'aéronef, temps écoulé depuis la dernière maintenance, etc.) pour définir les coefficients $C_i$.

Dans une étape 104, le système de gestion de paramètres de vol d'aéronefs effectue une optimisation de paramètres de vol de sorte à minimiser la fonction *F* de coût fixée grâce aux paramètres de fonction *F* de coût du vol définis à l'étape 103 (ou grâce aux coefficients $C_i$ ($i=1,..,N$) dans le mode de réalisation particulier susmentionné).

Les différents paramètres de vol sont :

- Trajectoire verticale
- Trajectoire latérale
- Vitesse
- Poussée
- etc.

Des contraintes peuvent être appliquées sur les paramètres de vol, de sorte à cadrer le système de gestion de paramètres de vol d'aéronefs dans un périmètre acceptable pour l'aéronef considéré (inclinaison, facteur de charge, etc.) et/ou dans un périmètre réglementaire acceptable (niveau de bruit en fonction de l'altitude et de la position géographique, etc.).

Pour déterminer les paramètres de vol, le système de gestion de paramètres de vol d'aéronefs peut utiliser des modèles numériques préétablis en fonction de l'aéronef considéré, de l'aéroport de départ et de l'aéroport d'arrivée, des horaires du trajet (jour, nuit, etc.) et potentiellement d'autres données relatives au vol à réaliser.

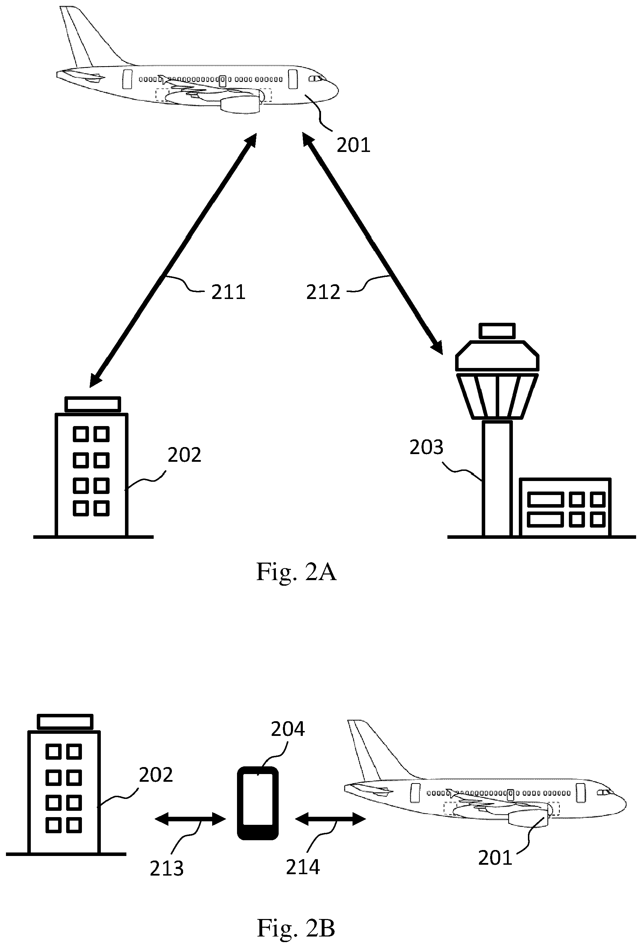

Dans une étape 105, le vol est effectué. L'avionique de l'aéronef effectuant le vol est programmée avec les paramètres de vol déterminés à l'étape 104. Comme détaillé ci-après en relation avec les Figs. 2A et 2B, la programmation de l'avionique avec les paramètres de vol applicables peut être réalisée de différentes manières, notamment par communications sans-fil entre la plateforme informatique du centre de contrôle de la compagnie aérienne et l'avionique, ou par le biais d'un équipement électronique portable à la disposition du pilote, appelé bagage électronique de vol EFB (« Electronic Flying Bag » en anglais). Ces bagages électroniques de vol EFB prennent généralement la forme de tablettes électroniques tactiles et contiennent typiquement des données de mission de vol, ainsi que les applications pour les exploiter, ou les mettre à jour, durant le vol.

Etant donné que les conditions de vol peuvent être amenées à évoluer par rapport à ce qui était initialement prévu, les paramètres de vol peuvent être amenés à subir des modifications pendant le vol (par exemple, suite à un événement météorologique imprévu). Ainsi, sur détection d'un événement en vol nécessitant une révision des paramètres de vol (trajectoire verticale, trajectoire latérale, vitesse...) dans une étape 110, les paramètres de fonction *F* de coût du vol (c'est-à-dire les coefficients $C_i$ ($i=1,..,N$) de fonction de coût du vol *F* vis-à-vis des *N* différents facteurs de coûts $F_i$, dans le mode de réalisation particulier déjà mentionné) sont recalculés, et de nouveaux paramètres de vol sont calculés de sorte à minimiser la fonction *F* de coût ainsi redéfinie, en tenant compte de nouvelles contraintes potentiellement induites par l'événement en question. Et l'avionique de l'aéronef effectuant le vol est reprogrammée en conséquence.

Dans une étape 106, le système de gestion de paramètres de vol d'aéronefs récupère préférentiellement les paramètres de vol qui ont été réellement appliqués par l'avionique pendant le vol. Comme détaillé ci-après en relation avec les Figs. 2A et 2B, la récupération des paramètres réels de vol peut être réalisée de différentes manières, notamment par communications sans-fil entre l'avionique de l'aéronef en question et la plateforme informatique du centre de contrôle de la compagnie aérienne, ou par le biais du bagage électronique de vol EFB à la disposition du pilote.

Dans une étape 107, le système de gestion de paramètres de vol d'aéronefs détermine une contribution effective du vol sur les objectifs globaux, au vu des paramètres de vol appliqués, et effectue une analyse de la contribution effective du vol sur les objectifs globaux. Et dans une étape 108, le système de gestion de paramètres de vol d'aéronefs prend en conséquence en compte d'éventuels ajustements pour de futurs vols vis-à-vis des objectifs globaux. Notamment des événements imprévus survenus en vol ont pu dérouter l'aéronef de sa trajectoire initialement prévue et ainsi modifier l'impact escompté du vol sur les objectifs globaux (émission de $CO_2$, bruit, consommation de carburant, etc.).

Ensuite l'étape 102 est répétée pour un nouveau vol, avec le même aéronef ou un autre aéronef. Ainsi grâce au *Smart Index,* la compagnie aérienne peut gérer sa flotte d'aéronefs, ses plannings de vols, et d'une manière générale ses opérations d'exploitations des lignes aériennes, en tenant compte de ses objectifs globaux.

La **Fig. 2A** illustre un premier schéma d'échanges entre différents acteurs dans lequel le *Smart Index* s'inscrit.

A gauche de la Fig. 2A est représenté le centre de contrôle 202 de la compagnie aérienne. A droite de la Fig. 2A est représenté le centre de contrôle 203 du trafic aérien.

Des communications sans-fil 212 (communications sol-air) sont établies entre l'aéronef 201, notamment en vol, et une plateforme informatique du centre de contrôle 203 du trafic aérien.

Des communications sans-fil 211 (communications sol-air) sont préférentiellement aussi établies entre l'aéronef 201, notamment en vol, et la plateforme informatique du centre de contrôle 202 de la compagnie aérienne.

Ainsi, grâce aux communications sans-fil 211, il est possible à la plateforme informatique du centre de contrôle 202 de la compagnie aérienne de transmettre à l'avionique de l'aéronef 201 le *Smart Index* ou des paramètres de mission (plan de vol, niveaux de vol, *Cost Index* unique ou multiple en fonction de la phase de vol, vitesse ou Mach de montée...), afin de permettre au système de gestion de vol FMS de prendre en compte le *Smart Index* ou ces paramètres de mission dans le calcul d'une trajectoire latérale et verticale avec des prédictions de temps et de consommation de carburant associées. Il est possible, grâce aux communications sans-fil 211, à l'avionique de l'aéronef 201 de transmettre à la plateforme informatique du centre de contrôle 202 de la compagnie aérienne les paramètres de vol réellement appliqués pendant le vol. Dans une variante de réalisation, les paramètres de vol sont calculés par la plateforme informatique du centre de contrôle 202 de la compagnie aérienne et transmis à l'avionique de l'aéronef 201. Ces paramètres de vol peuvent alors être modifiés en vol pour prendre en compte des événements imprévus.

Dans un mode de réalisation particulier, le système de gestion de vol FMS n'est apte à traiter que le *Cost Index* et pas le *Smart Index.* Dans ce cas, la plateforme informatique du centre de contrôle 202 de la compagnie aérienne convertit le *Smart Index* en une valeur équivalente de *Cost Index* ou en tout autre paramètre interprétable par l'avionique de l'aéronef 201 de type contrainte de vitesse ou d'altitude ou de position, et transmet cette valeur équivalente de *Cost Index* ou ledit paramètre à l'avionique de l'aéronef 201, de sorte que le système de gestion de vol FMS calcule des paramètres de vol (trajectoire, vitesse, poussée, etc.) adaptés au *Smart Index.*

De plus, grâce aux communications sans-fil 212, il est possible à la plateforme informatique du centre de contrôle 203 du trafic aérien de transmettre des informations et instructions de vol à l'avionique de l'aéronef 201, et de gérer des événements en vol nécessitant une révision des paramètres de vol.

La **Fig. 2B** illustre un deuxième schéma d'échanges entre différents acteurs dans lequel le *Smart Index* s'inscrit.

Dans la Fig. 2B, le bagage électronique de vol EFB à la disposition du pilote sert d'intermédiaire entre la plateforme informatique du centre de contrôle 202 de la compagnie aérienne et l'avionique de l'aéronef 101.

Ainsi, grâce à des communications 213 filaires (par exemple, de type USB (« Universal Serial Bus » en anglais)) ou sans-fil (par exemple, de type Bluetooth, Wi-Fi, 4G ou 5G)), il est possible à la plateforme informatique du centre de contrôle 202 de la compagnie aérienne de transmettre au bagage électronique de vol EFB le *Smart Index* ou les paramètres de mission. En variante, le bagage électronique de vol EFB peut intégrer un module de calcul pour calculer directement le Smart Index. Ensuite, grâce à des communications 214 filaires (par exemple, de type USB) ou sans-fil (par exemple, de type Bluetooth ou Wi-Fi)), il est possible au bagage électronique de vol EFB de transmettre à l'avionique de l'aéronef 201 le *Smart Index* ou les paramètres de mission, afin de permettre au système de gestion de vol FMS de prendre en compte le *Smart Index* ou ces paramètres de mission dans le calcul d'une trajectoire latérale et verticale avec des prédictions de temps et de consommation de carburant associées. Dans une variante de réalisation, les paramètres de vol sont calculés par la plateforme informatique du centre de contrôle 202 de la compagnie aérienne et transmis à l'avionique de l'aéronef 201 par l'intermédiaire du bagage électronique de vol EFB. Ces paramètres de vol peuvent alors être modifiés en vol pour prendre en compte des événements imprévus.

Dans le mode de réalisation particulier où le système de gestion de vol FMS n'est apte à traiter que le *Cost Index* et pas le *Smart Index,* le bagage électronique de vol EFB à la disposition du pilote sert d'intermédiaire entre le centre de contrôle 202 de la compagnie aérienne et l'avionique de l'aéronef 101 pour transmettre la valeur équivalente de *Cost Index* ou ledit paramètre interprétable par l'avionique de l'aéronef 201.

Les agencements schématiquement illustrés sur les Figs. 2A et 2B peuvent être combinés pour échanger entre le centre de contrôle 202 de la compagnie aérienne et l'avionique de l'aéronef 101 une partie des informations par l'intermédiaire du bagage électronique de vol EFB à la disposition du pilote et le reste des informations par le biais des communications sans-fil 211.

Ainsi, au vu de ce qui précède, le système de gestion de paramètres de vol d'aéronefs peut être exclusivement implémenté dans la plateforme informatique du centre de contrôle 202 de la compagnie aérienne, ou implémenté conjointement entre la plateforme informatique du centre de contrôle 202 de la compagnie aérienne et l'avionique de l'aéronef 201.

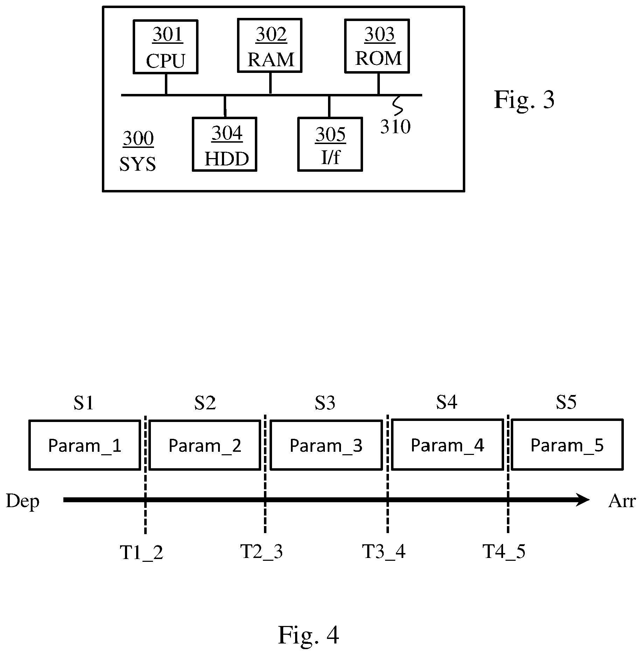

La **Fig. 3** illustre schématiquement un exemple d'une plateforme matérielle de système de traitement (« processing system » en anglais) 300, sous forme de circuiterie électronique, qui est adaptée et configurée pour implémenter les fonctionnalités du système de gestion de paramètres de vol d'aéronefs. La plateforme matérielle 300 est adaptée pour fournir une structure interne de traitement de données à la plateforme informatique du centre de contrôle 202 de la compagnie aérienne. La plateforme matérielle 300 est adaptée pour fournir une structure interne de traitement de données au bagage électronique de vol EFB. La plateforme matérielle 300 est adaptée pour fournir une structure interne de traitement de données à l'avionique de l'aéronef 201.

La plateforme matérielle comporte alors, reliés par un bus de communication 310 : un processeur ou CPU (« Central Processing Unit » en anglais) 301 ; une mémoire vive RAM (« Read-Only Memory » en anglais) 302 ; une mémoire morte 303, par exemple de type ROM (« Read Only Memory » en anglais) ou EEPROM (« Electrically-Erasable Programmable ROM » en anglais) ; une unité de stockage 304, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces I/f 305.

Le gestionnaire d'interfaces I/f 305 permet d'interagir avec un ou plusieurs équipements périphériques pour interagir avec un opérateur humain et/ou pour communiquer avec un système de communication (par exemple, pour réaliser des communications sans-fil).

Le processeur 301 est capable d'exécuter des instructions chargées dans la mémoire vive 302 à partir de la mémoire morte 303, d'une mémoire externe, d'un support de stockage (tel qu'une carte SD), ou d'un réseau de communication. Lorsque la plateforme matérielle est mise sous tension, le processeur 301 est capable de lire de la mémoire vive 302 des instructions et de les exécuter. Ces instructions forment un programme d'ordinateur causant l'implémentation, par le processeur 301, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, la plateforme matérielle comporte de la circuiterie électronique adaptée et configurée pour implémenter les fonctionnements et étapes décrits ici.

La **Fig. 4** illustre schématiquement une succession de segments de vol pendant lesquels différents paramètres de vol sont appliqués. Au départ (« Dep » sur la Fig. 4), dans un premier segment S 1, des premiers paramètres de vol Param_1 sont appliqués, typiquement pendant une phase de décollage. A un instant T1_2, les premiers paramètres de vol Param_1 sont remplacés par des deuxièmes paramètres de vol Param_2, pendant un segment S2, typiquement pendant une phase de montée. A un instant T2_3, les deuxièmes paramètres de vol Param_2 sont remplacés par des troisièmes paramètres de vol Param_3, pendant un segment S3, typiquement pendant une phase de croisière. A un instant T3_4, les troisièmes paramètres de vol Param_3 sont remplacés par des quatrièmes paramètres de vol Param_4, pendant un segment S4, typiquement pendant une phase de descente. A un instant T4_5, les quatrièmes paramètres de vol Param_4 sont remplacés par des cinquièmes paramètres de vol Param_5, pendant un segment S5, typiquement pendant une phase d'atterrissage à l'arrivée (« Arr » sur la Fig. 4). Bien entendu, la succession de segments de vol montrée sur la fig. 4 est purement illustrative et un vol d'aéronef peut contenir une quantité différente de segments de vol pendant lesquels différents paramètres de vol sont appliqués.

Le changement de paramètres de vol d'un segment de vol à un autre segment de vol peut être réalisé de manière automatique par l'avionique de l'aéronef 201. En variante, le changement de paramètres de vol d'un segment de vol à un autre segment de vol peut être réalisé par configuration par le pilote (i.e., manuellement), par exemple en suivant les informations enregistrées dans son bagage électronique de vol EFB.

## Revendications

1.  Procédé implémenté par une circuiterie électronique d'un système de gestion de paramètres de vol d'aéronefs (201), le système de gestion de paramètres de vol d'aéronefs étant paramétré avec des objectifs globaux de coûts de vols, le procédé comportant les étapes suivantes :

    - définir (103) en fonction des objectifs globaux de coûts de vols, pour un premier vol, des paramètres de fonction F de coût dudit premier vol vis-à-vis de N différents facteurs de coûts Fi;
    - effectuer (104) une optimisation de paramètres de vol de sorte à minimiser la fonction F de coût ;
    - programmer une avionique d'un aéronef (201) effectuant ledit premier vol avec lesdits paramètres de vol ;
- sur détection (110) d'un événement en vol nécessitant une révision des paramètres de vol, recalculer les paramètres de fonction *F* de coût du vol vis-à-vis des *N* différents facteurs de coûts $F_i$, recalculer les paramètres de vol, et reprogrammer l'avionique en conséquence ;
- déterminer une contribution effective du premier vol sur les objectifs globaux ; et
- réitérer le procédé pour au moins un deuxième vol en tenant compte de la contribution effective déterminée.

2. Procédé selon la revendication 1, dans lequel les paramètres de fonction *F* de coût sont des coefficients $C_i$, $i=1,..,N$ associés respectivement aux différents facteurs de coûts $F_i$ selon la formule :

$$F = \sum_{i=1}^{N} (C_i * F_i)$$

3. Procédé selon la revendication 1 ou 2, comprenant en outre l'étape suivante, pour déterminer la contribution effective du premier vol sur les objectifs globaux :

- récupérer (106) les paramètres de vol qui ont été réellement appliqués par l'avionique pendant ledit premier vol.

4. Procédé selon l'une quelconque des revendications 1 à 3, dans lequel les facteurs de coûts $F_i$ incluent au moins :

- coûts financiers,
- coûts environnementaux,
- coûts d'incertitudes météorologiques, et
- coûts de risque de retards de planning de vols.

5. Procédé selon l'une quelconque des revendications 1 à 4, dans lequel les paramètres de vol incluent au moins :

- trajectoire verticale,
- trajectoire latérale,
- vitesse, et
- poussée.

6. Procédé selon l'une quelconque des revendications 1 à 5, dans lequel le système de gestion de paramètres de vol d'aéronefs est exclusivement implémenté dans une plateforme informatique d'un centre de contrôle (202) d'une compagnie aérienne.

7. Procédé selon l'une quelconque des revendications 1 à 5, dans lequel le système de gestion de paramètres de vol d'aéronefs est implémenté conjointement entre une plateforme informatique d'un centre de contrôle d'une compagnie aérienne (202) et l'avionique des aéronefs (201).

8. Procédé selon la revendication 6 ou 7, dans lequel des bagages électroniques de vol (204) servent d'intermédiaires entre la plateforme informatique du centre de contrôle (202) de la compagnie aérienne et l'avionique des aéronefs (201), éventuellement en complément de communications sans-fil (211).

9. Procédé selon l'une quelconque des revendications 1 à 8, dans lequel, chaque vol étant composé d'une succession de segments de vol (S1, S2, S3, S4, S5), appliquer différents paramètres de vol à chaque segment de vol est réalisé de manière automatique par l'avionique, ou par configuration par un pilote.

10. Produit programme d'ordinateur comportant des instructions de code causant une implémentation du procédé selon l'une quelconque des revendications 1 à 5, lorsque les instructions sont réalisées par un processeur.

11. Système de gestion de paramètres de vol d'aéronefs, le système de gestion de paramètres de vol d'aéronefs étant paramétré avec des objectifs globaux de coûts de vols et comportant de la circuiterie électronique configurée pour implémenter les étapes suivantes :

- définir (103) en fonction des objectifs globaux de coûts de vols, pour un premier vol, des paramètres de fonction *F* de coût dudit premier vol vis-à-vis de *N* différents facteurs de coûts *Fi;*
- effectuer (104) une optimisation de paramètres de vol de sorte à minimiser la fonction *F* de coût ;
- programmer une avionique d'un aéronef (201) effectuant ledit premier vol avec lesdits paramètres de vol ;
- sur détection (110) d'un événement en vol nécessitant une révision des paramètres de vol, recalculer les paramètres de fonction *F* de coût du vol vis-à-vis des *N* différents facteurs de coûts $F_i$, recalculer les paramètres de vol, et reprogrammer l'avionique en conséquence ;
- déterminer une contribution effective du premier vol sur les objectifs globaux ; et
- réitérer le procédé pour au moins un deuxième vol en tenant compte de la contribution effective déterminée.

**101** Définition d'objectifs globaux de coûts de vols selon différents facteurs de coût

**102** Planification d'un vol

**103** Définition de paramètres de fonction de coût du vol

**104** Optimisation de paramètres de vol selon la fonction de coût du vol

**105** Exécution du vol

**110** Evénement en vol

**106** Récupération des paramètres de vol réels

**107** Analyse de la contribution du vol sur les objectifs globaux

**108** Prise en compte d'ajustements éventuels pour de futurs vols

Fig. 1

Fig. 2A

Fig. 2B

Fig. 3

Fig. 4

Europäisches
Patentamt

European
Patent Office

Office européen
des brevets

# RAPPORT DE RECHERCHE EUROPEENNE

Numéro de la demande

**EP 23 20 1348**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/301040 A1 (WALTNER PETER JAMES [US] ET AL) 18 octobre 2018 (2018-10-18) * alinéas [0008], [0034], [0035], [0038] – [0040], [0042], [0047], [0048], [0050], [0051], [0052] * ----- | 1-11 | INV. G08G5/00 G01C21/20 G05D1/00 G01C23/00 G06Q10/047 G05D1/644 G05D105/20 G05D107/13 G05D109/22 G05D101/15 |

**DOMAINES TECHNIQUES RECHERCHES (IPC)**

G05D
G08G
G01C
G06Q

Le présent rapport a été établi pour toutes les revendications

| Lieu de la recherche | Date d'achèvement de la recherche | Examinateur |
|---|---|---|
| La Haye | 30 janvier 2024 | Rocca, Simone |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 23 20 1348**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**30-01-2024**

| Document brevet cité au rapport de recherche | Date de publication | Membre(s) de la famille de brevet(s) | Date de publication |
|---|---|---|---|
| US 2018301040 A1 | 18-10-2018 | AUCUN | |

Pour tout renseignement concernant cette annexe : voir Journal Officiel de l'Office européen des brevets, No.12/82